**Europäisches Patentamt**

**European Patent Office**

**Office européen des brevets**

(19)

(11) Veröffentlichungsnummer: **0 237 598**
**B1**

(12) # EUROPÄISCHE PATENTSCHRIFT

(45) Veröffentlichungstag der Patentschrift:
**11.10.89**

(51) Int. Cl.⁴: **G01L 1/18**

(21) Anmeldenummer: **86103674.7**

(22) Anmeldetag: **18.03.86**

(54) Piezoresistives Kraftmesselement sowie dessen Verwendung zur Ermittlung von auf ein Bauteil einwirkenden Kräften.

(43) Veröffentlichungstag der Anmeldung:
**23.09.87 Patentblatt 87/39**

(45) Bekanntmachung des Hinweises auf die Patenterteilung:
**11.10.89 Patentblatt 89/41**

(84) Benannte Vertragsstaaten:
**AT CH DE FR GB LI**

(56) Entgegenhaltungen:
**US-A- 2 090 188**

(73) Patentinhaber: **Kristal Instrumente AG,
Eulachstrasse 22, CH-8408 Winterthur(CH)**

(72) Erfinder: **Baumgartner, Hans-Ulrich, Dr. Phys.,
Landenbergstrasse 45, CH-8404 Winterthur(CH)**
Erfinder: **Calderara, Reto, Dipl. Chem.,
Sonnhaldenstrasse 9, CH-8413 Neftenbach(CH)**
Erfinder: **Sonderegger, Hans-Conrad, Dipl. Ing.,
Sonnhaldenstrasse 7, CH-8413 Neftenbach(CH)**
Erfinder: **Weber, Peter, Dr., Schwarzbachstrasse 17,
CH-8713 Uerikon(CH)**

(74) Vertreter: **Schmidt, Horst, Dr., Siegfriedstrasse 8,
D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein piezoresistives Kraftmeßelement, bestehend aus wenigstens zwei Krafteinleitungsplatten zur Übertragung einer Kraft auf wenigstens einen zwischenliegenden elektrischen Leiter, dessen spezifische elektrische Leitfähigkeit durchabhängig ist, wobei die Kraftübertragung im wesentlichen senkrecht zur Haupterstreckungrichtung des Leiters erfolgt. Die Erfindung betrifft ferner die Verwendung eines solchen Kraftmeßelementes zur Ermittlung einer einwirkenden Spitzenkraft bzw. des zeitlichen Verlaufes von Kräften.

Bei der Entwicklung von neuen technischen Geräten sind zur Kontrolle der Kraftberechnungen oder zur Überwachung von Fabrikationsprozessen bzw. Funktionen von Maschinen Kraftaufnehmer notwendig. Kraftmessungen werden oft nachträglich geplant, wenn die Neukonstruktion unerwünschte Eigenschaften zeigt, deren Ursache nicht ohne weiteres ersichtlich sind. Beim Erstentwurf einer Neukonstruktion denkt man meist nicht an die Notwendigkeit von Kraftmessungen, was zur Folge hat, daß für die Kraftaufnehmer häufig kein Platz vorgesehen wird. Heute auf dem Markt angebotene Kraftaufnehmer haben vielfach große Abmessungen, die es wegen der vorhandenen engen Platzverhältnisse oft nicht erlauben, solche Aufnehmer einzubauen. Bekannt sind piezoelektrische Kraftaufnehmer, die flach, z. B. scheiben- oder ringförmig, gebaut sind, mithin wenig Volumen beanspruchen und oft als Unterlegscheibe an einer Achse oder zwischen zwei aneinanderstoßenden Maschinenteilen eingebaut sind. Diese Kraftaufnehmer beanspruchen zwar wenig Raum, erlauben jedoch keine statische Messung. Der Nullpunkt muß vor der Messung meist durch einen Erdungsvorgang am Verstärkereingang gesetzt werden, und, wenn der Meßvorgang über längere Zeit dauert, kann er sich verschieben. Diese Unsicherheit bezüglich des Nullpunktes schließt für gewisse Messungen die Anwendung von piezoelektrischen Aufnehmern aus. In sochen Fällen kommen Aufnehmer mit Dehnungsmeßstreifen sowie kapazitive oder induktive Kraftaufnehmer zur Anwendung, die erheblich voluminöser sind und insbesondere nicht flach gebaut werden können. Eine große Anzahl der auf dem Mark angebotenen Kraftaufnehmer mit Dehnungsmeßstreifen benützt den longitudinalen piezoresistiven Effekt, d.h. der Widerstandsdraht wird durch das Substrat, auf dem er haftet, in Längsrichtung gedehnt und vergrößert dabei seinen elektrischen Widerstand. Die Widerstandserhöhung dient als Maß für die Dehnung. Es ist auch schon vorgeschlagen worden (vergl. z.B. Oppermann, "A new force sensor with metal measuring grid transversal to the lines of force, Sensors and Actuators, 7, (1985), S. 223 ff) anstatt des longitudinalen den seit langem ebenfalls bekannten transversalen piezoresistiven Effekt auszunutzen, bei dem die Kraftrichtung und die Stromflußrichtung senkrecht zueinander stehen, was erlaubt, die Kraftaufnehmer flach auszubilden. Der bekannte Aufnehmer verwendet als Widerstandsmaterial aufgesputterte Schichten oder aus Folien geätzte Bänder aus Zeranin. Der bekannte Aufnehmer erlaubt keine Einstellung einer gewünschten bestimmten Meßempfindlichkeit.

Aus der DE-A-19 32 899 ist ein Kraftaufnehmer bekannt, der auf dem transversalen piezoresistiven Effekt beruht, wobei ein linien- oder flächenförmig ausgebildeter Leiter aus einem Widerstandsmaterial mittels einer elastischen Isolierschicht zwischen zwei elastischen Krafteinleitungsteilen angeordnet ist. Es entstehen Kraftnebenschlüsse, da nicht alle Kraftlinien den elektrischen Leiter durchqueren, was die Meßempfindlichkeit herabsetzt. Die wegen der elastischen Träger- oder Isolierschicht relativ undefinierte Fixierung des Leiters ermöglicht Querdehnungen, was eine elektrische Nullpunktdrift zur Folge hat, die korrigiert werden muß. Eine Einstellung des Aufnehmers auf eine bestimmte Empfindlichkeit ist ebenso wenig möglich wie die Messung bestimmter auf ein Bauteil einwirkender Spitzenkräfte.

Der Erfindung liegt demgegenüber die Aufgabe zugrunde, ein piezoresistives auf die Ausnutzung des transversalen Effektes beruhendes Kraftmeßelement der eingangs erwähnten Gattung zu schaffen, das ähnlich flach und platzsparend ausgebildet werden kann wie piezoelektrische Aufnehmer und über längere Untersuchungszeiträume eine genaue Ermittlung von einwirkenden Kräften in einem weiten Meßbereich ermöglicht.

Diese Aufgabe wird erfindungsgemäß durch die Merkmale im kennzeichnenden Teil des Patentanspruches 1 gelöst.

Danach ist der zwischen den Krafteinleitungsplatten angeordnete Leiter durch eine Vorpressung irreversibel, d.h. plastisch vorverformt und sind die Krafteinleitungsplatten so ausgebildet, daß diese die zu messenden Kräfte ohne mechanischem Nebenschluß auf den Leiter übertragen. Die Vorpressung mit plastischer Verformung des Leiters weitet den Meßbereich des Kraftmeßelementes, wie nachfolgend erläutert werden wird, erheblich aus und ermöglicht außerdem eine Einstellung der Empfindlichkeit des Aufnehmers auf den jeweiligen Anwendungsfall. Der Leiter kann auf einer Trägerplatte, welche vorzugsweise aus einem keramischen Material besteht, aufgewickelt sein, wobei diese Trägerplatte sandwichartig von zwei Krafteinleitungsplatten eingefaßt wird, die vorzugsweise ebenfalls aus einem keramischen mithin porösen Material gebildet sind. Durch die Vorpressung wird erreicht, daß der Leiter oder Widerstandsdraht durch die senkrecht auf seine Längsrichtung wirkende Kraft verformt wird. Sowohl die irreversible Widerstandsänderung infolge plastischer Verformung als auch die reversible Widerstandsänderung bei elastischer Verformung des Leiters können zur Kraftmessung herangezogen werden, wobei erstere die Messung gewisser Spitzenbelastungen, beispielsweise in der Ballistik, und letztere eine kontinuierliche Kraftmessung während eines ablaufenden Vorganges ermöglicht. Infolge der Steifheit der Krafteinleitungsplatten erfolgt die Krafteinleitung ohne mechanischem Nebenschluß, wodurch die Meßempfindlichkeit erheblich gesteigert wird. Durch das plastische Fließen des Leitermaterials in die natürlichen Poren der Krafteinleitungsplatten Leiter dort fest verankert, so daß die eindimensionale Belastung durch eine einwirkende Kraft quasi in eine im wesentlichen hydrostatische Belastung des Leiters umgewandelt wird, was eine enorme Vergrößerung des ausnutzbaren Meßbereiches und eine wesentliche Herabsetzung von Hystereseerscheinungen zur Folge hat. Anstelle einer Verankerung des Leiters in den Poren der Krafteinleitungsplatten bzw. der Trägerplatten kann die dadurch erzielbare Wirkung auch durch Einlegen des Leiters in Nuten in den betreffenden Platten erhalten werden. Um den Einfluß der Umgebungstemperatur auf den momentanen Widerstandswert bzw. Nullpunkt auszuschalten, kann ein Kompensationsleiter aus dem gleichen Material wie der Meßleiter an einer geeigneten nicht belasteten Stelle des Meßelementes vorgesehen sein.

Die Erfindung wird nachfolgend anhand bevorzugter Ausführungsformen und der Zeichnung näher erläutert.

Fig. 1 zeigt zwei Krafteinleitungsplatten mit dazwischen liegenden, plastisch deformierten Widerstandsdrähten, sowie die sie durchsetzenden Kraftlinien.

Fig. 2 zeigt graphisch den Zusammenhang zwischen der zu messenden Kraft und der Widerstandsänderung z.B. eines Drahtes im plastischen und elastischen Verformungsbereich.

Fig. 3 zeigt einen Querschnitt durch ein Keramikringpaket mit Widerstandswicklung.

Fig. 4 zeigt die Trägerplatte mit aufgewickeltem Widerstandsdraht der ringförmigen Ausführungsform.

Fig. 5 zeigt, in starker Vergrösserung, die Verankerung eines Widerstandsdrahtes in den Poren von zwei Krafteinleitungsplatten aus Keramik.

Fig. 6a,b zeigen die obere und untere mit Nuten versehene Krafteinleitungsplatte einer Ausführungsform, bei welcher der Widerstandsdraht mäanderförmig zwischen den beiden Platten angeordnet ist und in Nuten liegt.

Fig. 7a,b zeigen die obere und untere mit Nuten versehene Krafteinleitungsplatte einer zu Fig. 6a,b analogen Ausführungsform, wobei anstatt eines Widerstandsdrahtes eine aufgedampfte oder aufgesputterte elektrisch leitende Schicht verwendet wird.

Fig. 8 zeigt eine Trägerplatte mit doppeladriger Drahtwick lung, die zwischen zwei Krafteinleitungsplatten liegt.

Fig. 9 zeigt die perspektivische Ansicht eines vollständigen erfindungsgemässen Kraftmesselementes mit zugehöriger Elektronik in einem geeigneten Gehäuse.

Fig. 10 zeigt ein piezoresistives Kraftmesselement mit einer in eine periphere Ringnut gelegten Temperatur-Kompensationsleitung.

Fig. 11 zeigt Ringsegmente der Trägerplatte, an denen verschiedene Fixierungsmethoden der Drahtwindungen dargestellt sind (Kerben, Löcher, Haftfixierung)

Fig. 12a,b zeigen die Verankerung der Wickelenden an zwei Metallstiften am Rand der Trägerplatte

Fig. 13 zeigt die Abdeckung der Krafteinleitungsplatten mit einer Plastikhülse

Als Widerstandsmaterialien eignen sich beispielsweise Manganin (12 % Mn, 2 % Ni, 86 % Cu), Zeranin (12 % Mn, 2 % Ni, 0.5 % Ge, 85.5 % Cu) oder Chrom-Nickel-Legierungen, die alle einen sehr niedrigen Temperaturkoeffizienten des Widerstandes und einen beträchtlichen piezoresistiven Koeffizienten aufweisen. Diese Widerstandsmaterialien kommen auch für aufgedampfte, aufgeputterte oder aus Folien geätzten Schichten in Frage.

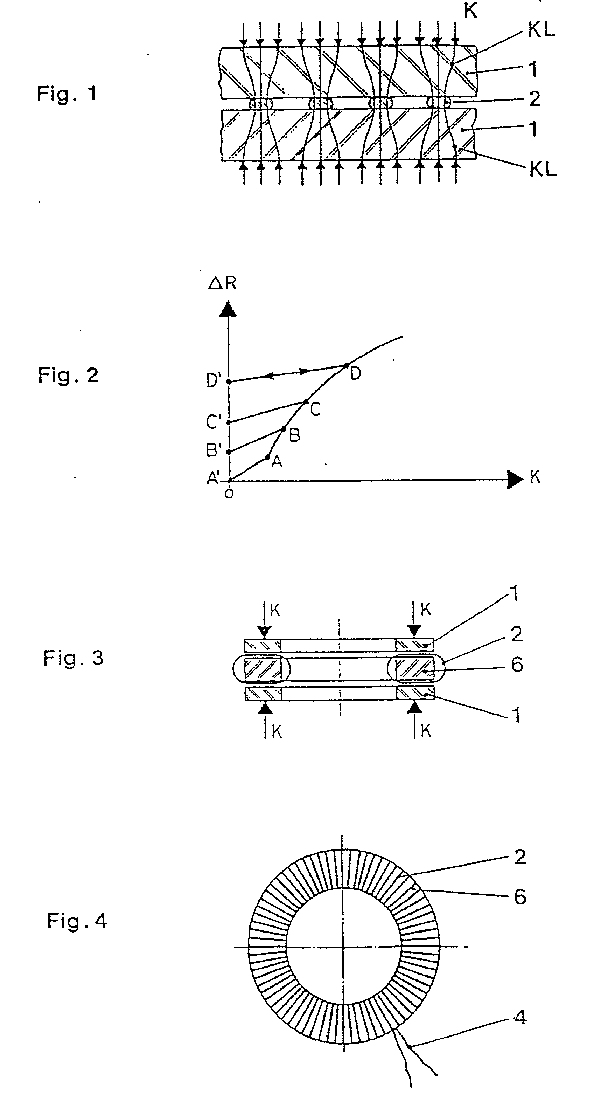

Fig. 1 zeigt zwei Krafteinleitungsplatten 1 mit dazwischenliegenden plastisch deformierten Leitern 2. Sie zeigt auch, dass die durch die eingeleiteten Kräfte K verursachten Kraftlinien KL erfindungsgemäss ohne mechanischen Nebenschluss die Leiter 2 durchdringen, wodurch der Messbereich erheblich erweitert werden kann und eine Unabhängigkeit von Krafteinleitungsort und Kraftverteilung erreicht wird. Dies wird erreicht durch Verwendung mechanisch steifer Krafteinleitungsplatten, beispielsweise aus Keramik bestehend. Elastische Krafteinleitungsplatten, wie sie in der oben erwähnten Deutschen Offenlegungsschrift 1 932 899 beschrieben werden, haben einen Kraft-Nebenschluss und dadurch eine Verminderung des nutzbaren Messbereiches,zudem unerwünschte Hystereseerscheinungen, sowie Nullpunktdrift zur Folge. Die ebenfalls in Fig. 1 gezeigte Abflachung des als Leiter 2 verwendeten Widerstandsdrahtes, vorzugsweise um einen Betrag zwischen 10 % und 40 % des Durchmessers,bewirkt dessen Verankerung in den Poren der Krafteinleitungsplatten 1, wodurch die Belastung der Leiter 2 durch eine eindimensionale Presskraft in eine im wesentlichen hydrostatische Belastung umgewandelt wird. Damit wird der nutzbare Messbereich nochmals enorm ausgeweitet.

Anhand von Fig. 2 sollen die sich bei der irreversiblen Widerstandsänderung durch plastische und der reversiblen Widerstandsänderung durch elastische Verformung abspielenden Vorgänge verdeutlicht werden. Fig. 2 zeigt den Zusammenhang zwischen der Grösse der Vorpress- bzw. Messkraft K und der Widerstandsänderung $\Delta R$ des Leiters. Bei niedriger Belastung von O bis A wird der Widerstandsdraht elastisch deformiert. Wird die Kraft K über A hinaus bis B gesteigert, so beginnt das Drahtmaterial zu fliessen, d.h. es setzt eine plastische Verformung ein und der Draht erfährt eine Abflachung. Das Kurvenstück A bis B ist wegen der Querschnittverminderung des Drahtes durch das Flachdrücken steiler als das Stück A'bis A. Sowohl der elastische wie auch der plastische Deformationsanteil des Drahtes bewirken eine Widerstandsvergrösserung, die sich in der Wirkung addieren.

Durch ständiges Vergrössern der Belastung gelangt man auf der Kurve über C schliesslich zum Punkt D, wobei die Kurve kontinuierlich an Steilheit verliert, weil die Krafteinleitungsplatten 1 sich auf eine immer grössere Fläche des stetig flacher werdenden Drahtes abstützen, wodurch die spezifische Flächenbelastung pro Einheit der Belastung abnimmt. Dies wiederum hat zur Folge, dass das Verhältnis der Zunahme des elektrischen Widerstandes zu der Belastungszunahme, $\Delta R/\Delta K$, mit steigender Belastung abnimmt, die Steilheit der Kurve während der plastischen Deformation von A über B und C nach D somit stetig abnimmt. Wenn man mit der Belastung beim Punkt D angelangt ist und sukzessive entlastet, so folgt die den elektrischen Widerstand in Funktion der Belastung angebende Kurve dem linearen Ast D - D′ und erreicht bei vollständiger Entlastung den Punkt D′. Bei erneuter Belastung wird vorerst wieder der Ast D′- D durchlaufen. Durch diese Reversibilität zeichnet sich der elastische Messbereich aus, wobei die Steigung der Geraden D′ - D die Messempfindlichkeit und die dem Punkt D zugeordnete Belastung den reversibel nutzbaren Messbereich kennzeichnen. Hätte man mit der Belastung bereits bei A, B oder C aufgehört, so hätte man auf analoge Weise den linearen und reversibel durchlaufbaren Kurvenästen C′ - C, B′ - B oder A′ - A folgen können, deren Steigung sich aus denselben Gründen unterscheidet wie oben für die plastische Verformung angeführt. Man erkennt somit, dass man die Messempfindlichkeit durch eine Vorpresskraft gezielt einstellen kann. Angenommen, dass während eines ballistischen Experimentes die Kraft ihren Spitzenwert gerade bei D erreicht hätte, so ergibt sich, dass die durch den Wert D′-A′ gegebene Widerstandsänderung ein direktes Mass für diesen Spitzenwert ist, weil während des Experimentes die Kurvenäste A′ - A - B - C - D′ durchlaufen wurden. Somit ist die durch die Strecke D′ - A′ gekennzeichnete Widerstandsänderung ein direktes Mass für die durch eine Kraftspitze verursachte bleibende plastische Deformation eines Leiters. Dabei ist es nicht notwendig, während des Experimentes ein Messinstrument anzuschliessen, eine Messung des elektrischen Widerstandes vor und nach dem Experiment genügt.

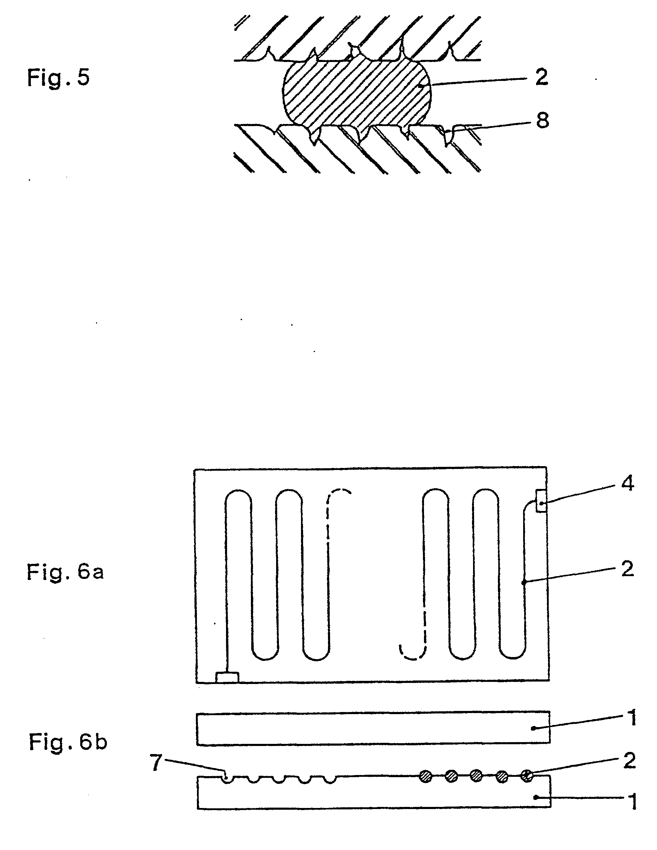

Fig. 3 zeigt eine ringförmige Trägerplatte 6 mit dem aufgewickelten Widerstandsdraht 2, zwischen zwei ringförmige Krafteinleitungsplatten 1 eingefasst, im Querschnitt und Fig. 4 die Aufsichtsprojektion der bewickelten Trägerplatte 6. Ein solcher Plattenstapel wird vorteilhafterweise vorgepresst mit einer Presskraft, die ausreicht, den Wicklungsdraht an den Auflagestellen um mindestens 10 % des Durchmessers, besser um 40 % des Durchmessers abzuflachen. Der Widerstandsdraht 2 wird beidseitig der Trägerplatte 6 beim Pressvorgang abgeflacht, wie schon Fig. 1 zeigt. Eine vergrösserte Detailzeichnung eines Schnittes durch einen gepressten Draht zeigt Fig. 5 mit dem Widerstandsdraht 2, dessen Material in einige Poren 8 der Trägerplatte 6, sowie der beiden Krafteinleitungsplatten 1 eindringt und damit eine Verankerung des Widerstandsdrahtes 2 in den drei Platten bewirkt.

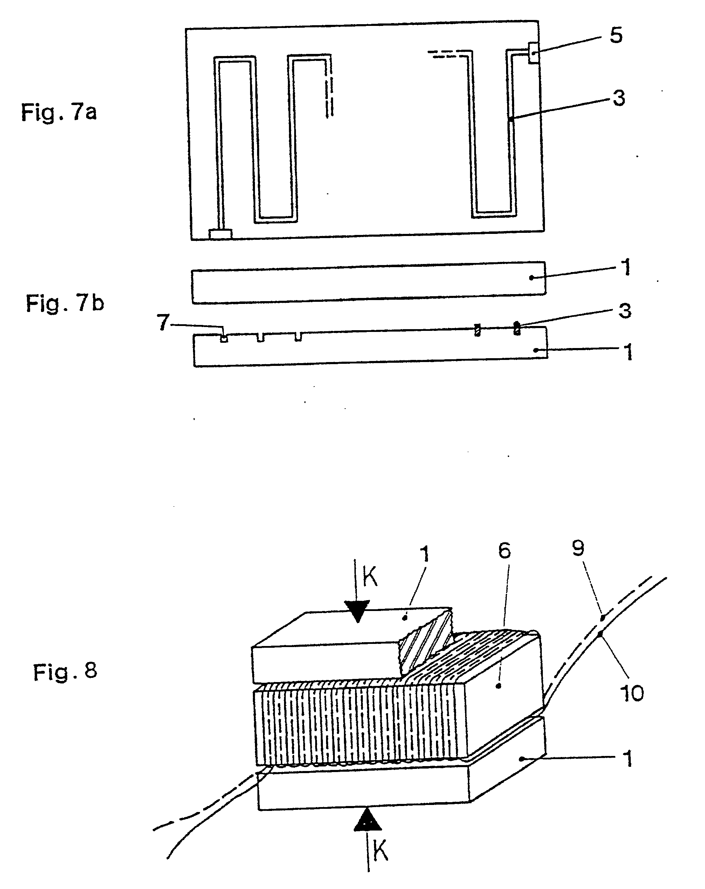

Diese Verankerung der Krafteinleitungsplatten 1 mit dem Widerstandsdraht 2 hat hauptsächlich die Aufgabe, die eindimensional wirkende Presskraft in eine im wesentlichen hydrostatisch wirkende Belastung des Widerstandsdrahtes umzuwandeln, indem bei der Kompession ein seitlicher Gegendruck entsteht. Dadurch wird der nutzbare Messbereich enorm ausgeweitet. Er kann bis zu mehreren tausend N/mm² erreichen, eine Belastung, die der Draht im einachsigen Spannungszustand nicht aushalten würde. Hydrostatische Belastung des Widerstandsdrahtes 2 kann auch dadurch erreicht werden, dass er ein- oder beidseitig in Nuten 7 eingelegt wird, wie dies Fig. 6b zeigt. Bei dieser Ausführungsform liegt der Draht mäanderförmig zwischen zwei Krafteinleitungsplatten 1, von denen die eine mit Nuten 7 versehen ist. Eine weitere erfindungsgemässe Ausführungsform zeigt die Fig. 7a,b. Anstatt eines Drahtes wird hier eine aufgedampfte, aufgesputterte oder durch ein Aetzverfahren geformte elektrisch leitende Schicht 3 verwendet, die ebenfalls in Nuten 7 verankert sein kann.

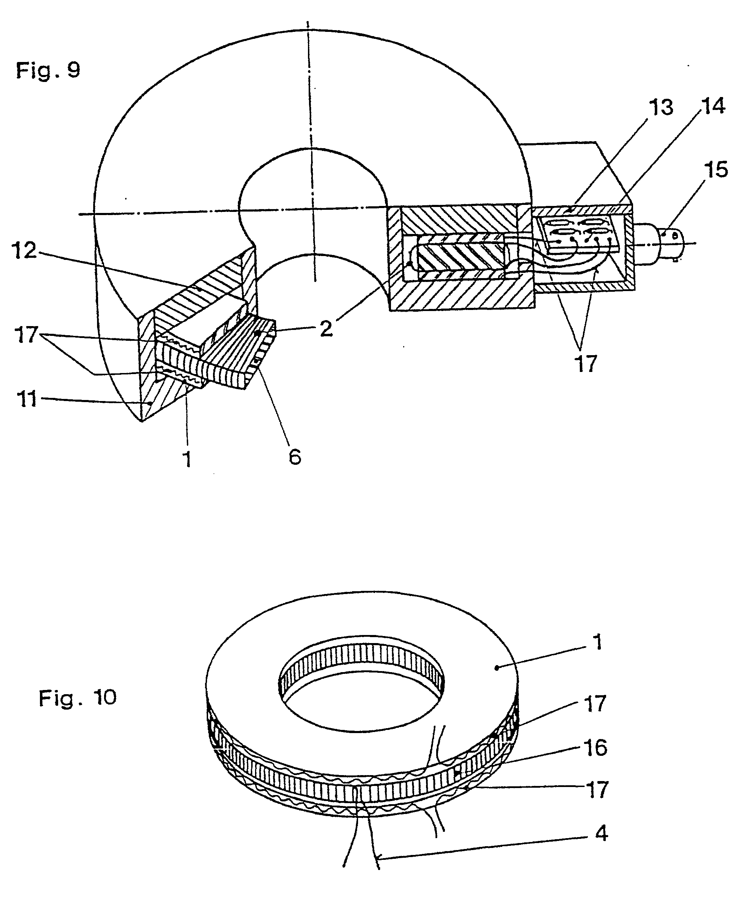

Fig. 8 zeigt eine weitere einen Widerstandsdraht 2 verwendende Ausführungsform, bei der die Trägerplatte 6 und die Krafteinleitungsplatten 1 als Rechteck ausgebildet sind. Als weitere Variante einer möglichen Ausführungsform ist eine doppeladrige Wicklung mit zwei Drähten 9,10 eingezeichnet. Durch eine solche Bewicklung erhält man zwei getrennte Widerstände, die beide als aktive Glieder gegenüberliegend in eine Messbrücke geschaltet werden können, womit man eine Verdoppelung der Empfindlichkeit erreicht.

Eine weitere Folge der Verankerung des Widerstandsdrahtes 2, beispielsweise mittels Poren 8 in den Krafteinleitungsplatten 1, 6 besteht darin, dass die genannten Platten mit dem Draht montagetechnisch eine Einheit bilden. Diese Einheit kann in ein passendes Gehäuse 11, 12 eingelegt werden, wodurch ein Kraftaufnehmer entsteht, wie Fig. 9 zeigt. Dieser besitzt einen vorzugsweise plangeschliffenen Gehäuseboden mit seitlichem Mantel 11 und einem ebensolchen Gehäusedeckel 12. Gehäuseboden und -deckel sind vorteilhafterweise unter Vorspannung miteinander verbunden, damit das Plattenpaket 1, 6, 1 im Innern zusammengepresst wird. Zweckmässigerweise ist am genannten Gehäuse 11, 12 ein Elektronikgehäuse 13 mit einer elektronischen Leiterplatte 14 und einem Stecker 15 angebaut. Das Elektronikgehäuse 13 dient der Unterbringung der aus gleichem Material wie der Pressdraht bestehenden Kompensationswiderstände und Verstärker. Der Kraftaufnehmer Fig. 9 kann so zum Beispiel zu einem Krafttransmitter ausgebaut werden.

Fig. 10 zeigt die Möglichkeit, die Kompensationswicklung 17 in eine periphere Ringnut an einer Krafteinleitungsplatte 1 einzulegen. Dies ist eine sehr vorteilhafte Anbringungsart dieser Wicklung 17, da auf diese Weise die Druckkraft nicht auf die Kompensationswicklung wirken kann und die Anordnung platzsparend ist. Ferner hat die Kompensationswicklung 17 dieselbe Temperatur wie die Messwicklung 16, weil sie denselben Körper berührt.

Die Bewicklung der Trägerplatten mit Widerstandsdraht erfolgt im allgemeinen mit einer Wickelmaschine. Speziell im Falle kleiner Ringe kommt auch Bewicklung von Hand in Frage. Dabei dürfen sich die Drahtwindungen nicht berühren, um erratische Widerständsänderungen zu vermeiden.

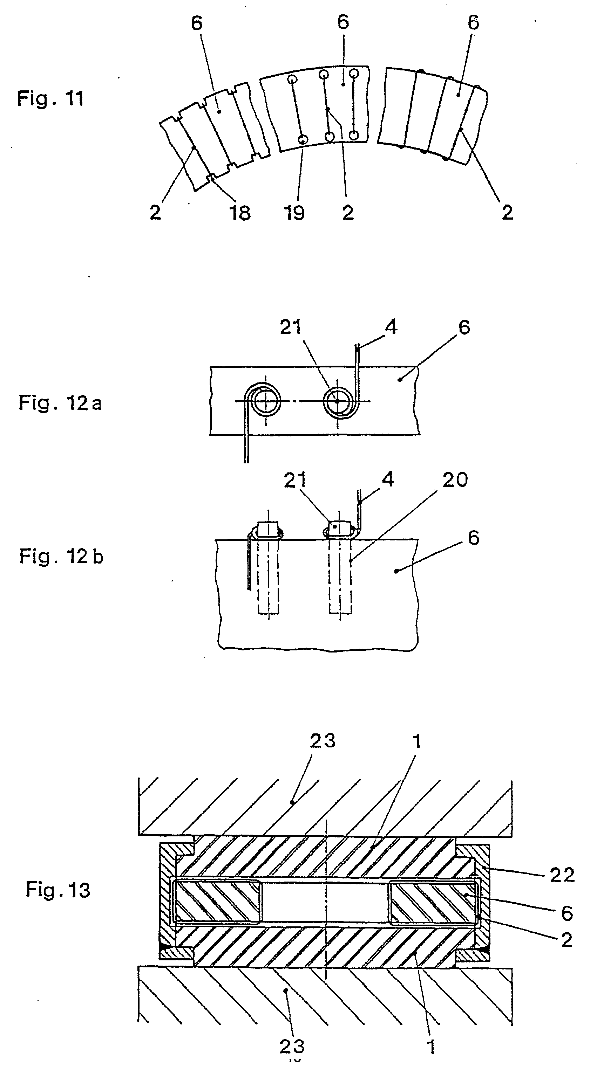

Handbewicklung erfordert oft Wickelhilfen. Fig. 11 zeigt einige Möglichkeiten für solche Wickelhilfen, die als Drahtführungen gedacht sind. Dies sind im linken Ringsegment Kerben 18, in die der Draht gelegt wird oder im mittleren Ringsegment Löcher 19, durch die der Draht gezogen wird. Da die Bearbeitung der Keramik der Trägerplatte 6 aufwendig und teuer ist, kann es vorteilhaft sein, diese mit einer anhaftenden Berandung aus einem weicheren Isolationsmaterial zu versehen, in welche die Kerben 18 oder Löcher 19 leicht eingearbeitet werden können. Das rechte Ringsegment zeigt haftende Bewicklung auf der nackten Ringoberfläche.

Ein gewisses Problem bilden die Wicklungszuführungen und -wegführungen beim Pressen der Krafteinleitungsplatten 1, 6. Wenn der Draht zwischen zwei zusammengepressten Platten hervortritt, so erfährt er eine Querschnittsänderung von einem Oval (innen) zu einem Kreis (aussen), was eine gewisse Kerbwirkung verursacht, so dass der Draht schon nach wenigen Bewegungen an dieser Stelle abbricht. Vorteilhafterweise versieht man den Rand der Trägerplatte 6 mit zwei Sacklöchern 20, in denen Messing- oder Kupferstifte 21 mittels Kleber befestigt sind. Die Drähte 4 der Wicklungsenden können dann an diesen Stiften 21 festgelötet werden. Die Stifte 21 können zugleich auch als Lötstützpunkte für die Zuführungskabel dienen (Fig. 12a,b)

Fig. 13 schliesslich zeigt eine Ausführungsform, bei der die Krafteinleitungsplatten 1 mittels einer verschweissten Plastikhülse 22 die mit dem Widerstandsdraht 2 umwickelte Trägerplatte 6 unter Vorspannung halten und auf diese Weise eine Einheit gebildet wird, die speziell geeignet ist für die direkte Krafteinleitung zwischen zwei Krafteinleitungsstempeln 23.

Die Erfindung ermöglicht somit den Bau von sehr flachen und hoch belastbaren Kraftmesselementen, welche in verschiedenartigsten Messwertaufnehmern für Kräfte, Drücke und Beschleunigungen Verwendung finden können.

Ein besonderer Vorteil gegenüber bekannten Ausführungen ist die Möglichkeit, die erfindungsgemässen Kraftmesselemente nicht nur im elastischen Bereich einsetzen zu können, sondern auch im Sinne eines Crash-Sensors Ueberbelastungen physikalisch zu speichern und zu einem beliebigen Zeitpunkt nach dem Ueberlastereignis auszuwerten, ohne dass das Kraftmesselement während des Ueberlastereignisses elektrisch angeschlossen sein müsste.

Anhand eines praktischen Beispiels soll dargestellt werden, dass die beiden erwähnten Fälle, nämlich die reversible Messung im elastischen Bereich und die nachträgliche Feststellung einer Spitzenkraft, die während eines Ueberlastereignisses wirksam war, auf vorteilhafte Art kombiniert werden können. Soll beispielsweise der zeitliche Kraftverlauf während eines oder mehrerer Pressvorgänge an einer Presse gemessen werden, so arbeitet das Kraftmesselement im elastischen und somit reversiblen Bereich. Kontinuierlich wird der Vorgang von neuem registriert. Bei Ueberlastung des Presswerkzeuges, beispielsweise weil es im Verlaufe seiner Lebensdauer weniger widerstandsfähig geworden ist, kann dieses zu Bruch gehen. Bei der Analyse eines solchen "Umfalles" interessiert natürlich die Spitzenkraft, welche das Werkzeug zu Bruch gehen liess. Die Bestimmung dieser Spitzenkraft ist mit dem erfindungsgemässen Kraftmesselement auf einfache Weise möglich, indem lediglich eine Widerstandsmessung am Anfang des Experimentes und eine weitere irgendwann nach dem "Unfall" durchgeführt werden muss. Das Kraftmesselement arbeitet in diesem Falle als physikalischer Speicher und dadurch als Crash-Sensor, der als Beweisstück dienen kann.

Die physikalisch gespeicherten Spitzenkräfte, die bei einem Unfall gewirkt haben, interessieren beispielsweise auch bei wichtigen Tragteilen von Flugzeugen, Raumfähren und Lokomotiven.

Das Messen und Registrieren von Beschleunigungen und Drücken kann auf das Messen und Registrieren von Kräften zurückgeführt werden.

Somit dient das beschriebene Kraftmesselement, wenn es im plastischen Verformungsbereich arbeitet, in analoger Weise als Crash-Sensor für Drücke, beispielsweise bei Staubdetonationen. Explosionen von Autoklaven und anderen Behältern für explosive Flüssigkeiten und Gase. Als Schock-Accelerometer für Beschleunigungen kann das Kraftmesselement zur Analyse von Unfällen mit Flug- und Raumfahrzeugen dienen. Gerade hier kann die Funktion eines Beweisstückes von besonderer Wichtigkeit sein. Crash-Sensoren können als volle Einbauplatten oder als Messunterlagsscheiben ausgestaltet werden, zum Beispiel, als erfindungsgemässes Kraftmesselement in einem hermetisch abgeschlossenen Gehäuse analog Fig. 9.

## Patentansprüche

1. Piezoresistives Kraftmeßelement, bestehend aus wenigstens zwei Krafteinleitungsplatten zur Übertragung einer Kraft auf wenigstens einen zwischenliegenden elektrischen Leiter, dessen spezifische elektrische Leitfähigkeit druckabhängig ist, wobei die Kraftübertragung im wesentlichen senkrecht zur Haupterstreckungsrichtung des Leiters erfolgt, dadurch gekennzeichnet, daß der Leiter (2) durch eine Vorpreßkraft zwischen den Krafteinleitungsplatten (1) plastisch vorverformt ist und die Wirkungslinien der zu messenden Kräfte den Leiter im wesentlichen ohne mechanischen Nebenschluß durchdringen.

2. Kraftmeßelement nach Anspruch 1, dadurch gekennzeichnet, daß die Krafteinleitungsplatten (1) aus einem elektrisch isolierenden Material bestehen.

3. Kraftmeßelement nach Anspruch 2, dadurch gekennzeichnet, daß das isolierende Material ein poröses Keramikmaterial ist.

4. Kraftmeßelement nach Anspruch 1, 2 oder 3, dadurch gekennzeichnet, daß durch Einstellung der Vorpreßkraft die Empfindlichkeit des Aufnehmers im elastischen Verformungsbereich des Leiters (2) auf einen bestimmten Wert einstellbar ist.

5. Kraftmeßelement nach Anspruch 4, dadurch gekennzeichnet, daß die Empfindlichkeit des Aunehmers auf eine ganzzahlige Kalibrierkonstante einstellbar ist.

6. Kraftmeßelement nach einem der vorhergehenden Ansprüche, dadurch gekennzeichnet, daß der Leiter (2) durch die plastische Verformung in den Poren (8) der Krafteinleitungsplatten (1) verankert ist.

7. Kraftmeßelement nach einem der vorhergehenden Ansprüche, dadurch gekennzeichnet, daß der Leiter (3) in Nuten (7) angeordnet ist.

8. Kraftmeßelement nach einem der vorhergehenden Ansprüche, dadurch gekennzeichnet, daß der Leiter (2) auf einer Trägerplatte (6) aufgebracht ist, die zwischen den beiden Krafteinleitungsplatten (1) angeordnet ist.

9. Kraftmeßelement nach einem der vorhergehenden Ansprüche, dadurch gekennzeichnet, daß die Platten (1, 6) im wesentlichen rechteckförmig ausgebildet sind.

10. Kraftmeßelement nach einem der vorhergehenden Ansprüche 1 bis 8, dadurch gekennzeichnet, daß die Platten (1, 6) ringförmig ausgebildet sind.

11. Kraftmeßelement nach Anspruch 8, dadurch gekennzeichnet, daß der elektrische Leiter (2) in Form einer Toroidwicklung auf der Trägerplatte (6) aufgebracht ist.

12. Kraftmeßelement nach einem der vorhergehenden Ansprüche, dadurch gekennzeichnet, daß die Anordnung aus Krafteinleitungsplatten (1), Trägerplatte (6) und Leiter (2) in einem Gehäuse (11, 12) unter mechanischer Vorspannung eingebaut ist.

13. Kraftmeßelement nach einem der vorhergehenden Ansprüche, dadurch gekennzeichnet, daß der Leiter (2) wenigstens einen Zweig einer Meßbrücke bildet.

14. Kraftmeßelement nach Anspruch 8, dadurch gekennzeichnet, daß die Trägerplatte (6) parallel doppeladrig bewickelt ist und jede Wicklung (9, 10) je einen gegenüberliegenden Zweig einer Meßbrücke bildet.

15. Kraftmeßelement nach Anspruch 12, dadurch gekennzeichnet, daß das Gehäuse (11, 12) eine unbelastete Kompensationsleitung (17) aus demselben Material wie der Leiter (2) umfaßt, um den Einfluß der Temperatur auf die Widerstandsänderung zu kompensieren.

16. Kraftmeßelement nach Anspruch 15, dadurch gekennzeichnet, daß die Kompensationsleitung (17) in eine periphere Ringnut (17) an mindestens einer der Krafteinleitungsplatten oder Trägerplatten (1, 6) eingelegt ist.

17. Kraftmeßelement nach einem der vorhergehenden Ansprüche, dadurch gekennzeichnet, daß die Krafteinleitungsplatten (1, 6) zusammen mit einer Zusatzelektronik (14) in einem Gehäuse (11, 12, 13) untergebracht sind, um einen Transmitter zu bilden.

18. Verwendung eines piezoresistiven Kraftmeßelementes nach einem der vorhergehenden Ansprüche zur Ermittlung einer einwirkenden Spitzenkraft, welche eine weitere irreversible Verformung des elektrischen Leiters zur Folge hat, dadurch gekennzeichnet, daß man den Widerstandswert des elektrischen Leiters (2) vor und eine beliebige Zeit nach Einwirken der Spitzenkraft, ohne oder mit Anschluß des Kraftmeßelementes an ein Meßinstrument während des Einwirkens der Kraft, mißt, und aus der durch die irreversible Verformung verursachten Widerstandänderung die Spitzenkraft ermittelt.

19. Verwendung eines piezoresistiven Kraftmeßelementes nach einem der Ansprüche 1 bis 17 zur Ermittlung des zeitlichen Verlaufes von einwirkenden Kräften, dadurch gekennzeichnet, daß der Meßbereich so gewählt wird, daß die einwirkenden Kräfte im wesentlichen nur reversible elastische Verformungen des Leiters (2) verursachen.

## Claims

1. Piezoresistive force measuring element consisting of at least two force introduction plates for transmitting a force onto at least one electrical conductor arranged between them, its specific electrical conductivity depending on pressure, whereby the force is transmitted essentially at right angles to the main orientation of the conductor, characterized by the conductor (2) undergoing prior plastic deformation between the force introduction plates (1) by a preload force, and the lines of action to the forces to be measured penetrating essentially without mechanical shunting.

2. Force measuring element according to claim 1, characterized by the force introduction plates (1) consisting of an electrically insulating material.

3. Force measuring element according to claim 2, characterized by the insulating material being a porous ceramic.

4. Force measuring element according to claims 1, 2 or 3, characterized by the adjustability of the transducer sensitivity to a certain value in the elastic deformation range of the conductor (2) by varying the preload force.

5. Force measuring element according to claim 4, characterized by the sensitivity of the transducer being adjustable to a whole-number calibration constant.

6. Force measuring element according to one of the foregoing claims, characterized by the anchoring of the conductor (2) in the pores (8) of the force introduction plates (1) by plastic deformation.

7. Force measuring element according to one of the foregoing claims, characterized by the conductor (3) being located in grooves (7).

8. Force measuring element according to one of the foregoing claims, characterized by the conductor (2) being mounted on a carrier plate (6) arranged between two force introduction plates (1).

9. Force measuring element according to one of the foregoing claims, characterized by the plates (1, 6) of essentially rectangular shape.

10. Force measuring element according to one of the foregoing claims 1 to 8, characterized by the plates (1, 6) of annular shape.

11. Force measuring element according to claim 8, characterized by the electrical conductor (2) mounted on the carrier plate (6) in the form of a toroidal winding.

12. Force measuring element according to one of the foregoing claims, characterized by the arrangement of force introduction plates (1), carrier plate (6) and conductor (2) in a housing (11, 12) under mechanical preload.

13. Force measuring element according to one of the foregoing claims, characterized by the conductor (2) forming at least one arm of a bridge circuit.

14. Force measuring element according to claim 8, characterized by the carrier plate (6) being wound with twin wire, each winding (9, 10) forming an opposite arm of a bridge circuit.

15. Force measuring element according to claim 12, characterized by the housing (11, 12) enclosing an unloaded compensating conductor (17) of the same material as conductor (2), in order to compensate the effect of temperature on the change of resistance.

16. Force measuring element according to claim 15, characterized by the compensating conductor (17) recessed in a circumferential groove (17) on at least one of the force introduction plates or carrier plates (1, 6).

17. Force measuring element according to one of the foregoing claims, characterized by the accommodation of the force introduction plates (1, 6) together with supplementary electronics (14) in a housing (11, 12, 13) to form a transmitter.

18. Use of a piezoresistive force measuring element according to one of the foregoing claims for determining a peak force sustained, which results in a further irreversible deformation of the electrical conductor, characterized by measurement of the resistance of the electrical conductor (2) before and any time after the action of the peak force, with or without connection of the force measuring element to a measuring instrument while the force is applied, and determination of the peak force from the change of resistance caused by the irreversible deformation.

19. Use of a piezoresistive force measuring element according to one of the claims 1 to 17 for determining the behaviour against the time scale of forces sustained, characterized by selection of the measuring range to ensure that the forces imposed cause essentially only reversible elastic deformation of the conductor (2).

**Revendications**

1. Elément de mesure de force composé d'au moins deux plaques d'introduction des efforts pour la transmission d'une force à au moins un conducteur électrique intercallé et dont la conductibilité électrique spécifique est fonction de la pression, la transmission de la force étant essentiellement perpendiculaire à la direction principale de l'allongement du conducteur, caractérisé par le fait que le conducteur (2) est prédéformé plastiquement entre les deux plaques d'introduction des efforts (1) par une force de précontrainte et que les lignes de force de la force à mesurer traversent le conducteur pratiquement sans flux mécanique parasite.

2. Elément de mesure de force selon revendication de brevêt 1 caractérisé par le fait les plaques d'introduction des efforts (1) sont réalisées dans un matériau électriquement isolant.

3. Elément de mesure de force selon revendication 2 caractérisé par le fait que la matière isolante est un matériau céramique poreux.

4. Elément de mesure de force selon revendication 1, 2 ou 3 caractérisé par le fait que, par ajustement de la force de précontainte, la sensibilité du capteur est règlable à une valeur donnée dans la plage de déformation élastique du conducteur (2).

5. Elément de mesure de force selon revendication du brevet 4, caractérisé par le fait que la sensibilité du capteur est règlage à une constante d'étalonnage dont la valeur est un nombre entier.

6. Elément de mesure de force selon l'une des revendications précédentes caractérisé par le fait que le conducteur (2) est ancré dans les pores des plaques d'introduction des efforts (1) par déformation plastique.

7. Elément de mesure de force selon l'une des revendications de brevêt précédentes caractérisé par le fait que le conducteur (3) est aménagé dans des rainures (7).

8. Elément de mesure de force selon l'une des revendications précédentes caractérisé par le fait que le conducteur (7) est monté sur une plaque-support (6) aménagée entre les plaques d'introduction des efforts (1).

9. Elément de mesure de force selon l'une des revendications précédentes caractérisé par le fait que les plaques (1, 6) sont essentiellement de forme rectangulaire.

10. Elément de mesure de force selon l'une des revendications 1 à 8 caractérisé par le fait que les plaques (1, 6) sont de forme annulaire.

11. Elément de mesure de force selon revendication 8 caractérisé par le fait que le conducteur électrique (2) est bobiné en forme de tore sur la plaque-support (6).

12. Elément de mesure de force selon l'une des revendications précédentes caractérisé par le fait que l'ensemble constitué par les plaques d'introduction des efforts (1), la plaque-support (6) et le conducteur (2) est intégré sous précontrainte mécanique dans un boîtier (11, 12).

13. Elément de mesure de force selon l'une des revendications de brevêt caractérisé par le fait que le conducteur (2) constitue au moins l'une des dérivations d'un pont de mesure.

14. Elément de mesure de force selon revendication 8 caractérisé par le fait que la plaque-support (6) possède un bobinage parallèle à deux brins et que chaque bobinage (9, 10) constitue l'une des dérivations d'un pont de mesure.

15. Elément de mesure de force selon revendication 12 caractérisé par le fait que le boîtier (11, 12) comprend un fil de compensation (17) non sollicité réalisé dans le même matériau que le conducteur (12) afin de compenser l'influence de la température sur les variations de résistance.

16. Elément de mesure de force selon revendication 15 caractérisé par le fait que le fil de compensation (17) est aménagé dans une gorge circulaire (17) à la périphérie de l'une au moins des plaques d'introduction des efforts ou plaque-supports (1, 6).

17. Elément de mesure de force selon l'une des revendications précédentes caractérisé par le fait que les plaques d'introduction des efforts (1, 6) sont installées avec l'électronique correspondante (14) dans un boîtier (11, 12, 13) afin de constituer un transmetteur.

18. Utilisation d'un élément de mesure de force piézo-résistif selon l'une des revendications de brevêt ci-dessus pour la détermination d'une force de pointe provoquant une déformation irréversible supplémentaire du conducteur électrique caractérisée par le fait que la mesure peut être effectuée avant ou un certain temps après l'application d'une force de pointe, l'élément de mesure de force étant ou non connecté à un instrument de mesure durant l'application de la force et permettant grâce à la variation de résistance due à la déformation irréversible de déterminer la force de pointe.

19. Utilisation d'un élément de mesure de force piézo-résistif selon l'une des revendications 1 à 17 pour la détermination de l'évolution chronologique de forces appliquées caractérisée par le fait que la gamme de mesure peut être choisie de façon à ce que les forces appliquées n'occasionnent que des déformations élastiques réversibles du conducteur (2).

Fig. 1

Fig. 2

Fig. 3

Fig. 4

Fig. 5

Fig. 6a

Fig. 6b

Fig. 7a

Fig. 7b

Fig. 8

Fig. 9

Fig. 10

Fig. 11

Fig. 12 a

Fig. 12 b

Fig. 13